# EUROPEAN PATENT APPLICATION

(11) **EP 4 682 296 A1**
(43) Date of publication of application: **21.01.2026**
(21) Application number: 24774838.7
(22) Date of filing: 14.03.2024
(51) Int. Cl.: C25B 9/00, C25B 1/042, C25B 9/67, C25B 15/021, H01M 8/12

(54) **SOLID OXIDE-TYPE ELECTROLYTIC CELL SYSTEM**

(30) Priority: 17.03.2023 JP 2023043598
(71) Applicant: AISIN CORPORATION, Kariya-shi, Aichi 448-8650 (JP)
(72) Inventor: OGURI Nobuaki, Kariya-shi, Aichi 448-8650 (JP); HORIUCHI Koichiro, Kariya-shi, Aichi 448-8650 (JP)
(74) Representative: Cabinet Beau de Loménie
(86) International application number: PCT/JP2024/010108
(87) International publication number: WO 2024/195700

(57) **Abstract**

A solid oxide-type electrolysis cell system includes: a solid oxide-type electrolysis cell; a combustion unit configured to combust a fuel electrode off-gas from a fuel electrode of the solid oxide-type electrolysis cell; a case that has a heat insulating property and houses the solid oxide-type electrolysis cell and the combustion unit; a water and steam supply unit configured to supply water or steam to a fuel supply line connected to the fuel electrode; a preheating unit provided in the case and configured to preheat water or steam flowing through the fuel supply line by combustion heat of the combustion unit; a condensation unit provided outside the case and configured to condense steam contained in the fuel electrode off-gas from the fuel electrode; and a combustion reflux line configured to reflux a part of the fuel electrode off-gas having passed through the condensation unit by driving a pump and to supply the part of the fuel electrode off-gas to the combustion unit.

## Description

### Technical Field

This disclosure relates to a solid oxide-type electrolysis cell system.

### Background Art

In the related art, a solid oxide-type electrolysis cell system including a solid oxide-type electrolysis cell is known. For example, PTL 1 discloses a hydrogen production system including an evaporator that heats water to generate steam and an electrolysis cell that electrolyzes the steam, the hydrogen production system including a heat storage tank including a heat storage material (magnesium hydroxide heat storage material), in which heat provided from an external heat source is stored by a dehydration reaction, and the stored heat is radiated to an evaporation unit by a hydration reaction. The evaporation unit is provided with a heater, and when heat is not provided from the external heat source, heating by the heater is also used.

PTL 2 discloses an SOE/SOFC system in which a solid electrolyte cell capable of performing high-temperature steam electrolysis and reversible operation of a solid fuel cell is provided in parallel with a power generation plant such as a nuclear power generation plant or a thermal power generation plant, hydrogen and steam discharged from the cell during SOE (electrolysis) operation are cooled by a regenerative heat exchanger (HX-2) and a heat exchanger (HX-4), and then separated into steam by a separator, and the hydrogen is collected in a hydrogen tank and the water is collected in a water tank. The SOE/SOFC system includes the heat exchanger (HX-4) that heats water from the water tank, a heat exchanger (HX-1) that heats steam for electrolysis by heat from the power generation plant, and a combustor that heats steam for electrolysis by combusting oxygen from an oxygen tank and hydrogen mixed with the steam for electrolysis having passed through the heat exchanger (HX-1).

### Citation List

### Patent Literature

PTL 1: JP2022-144623A
PTL 2: JP2001-160404A

### Summary of Invention

### Technical Problem

In the solid oxide-type cell system described in PTL 1, when the external heat source is exhaust heat such as factory exhaust heat, since the heat source has high variability, a heat storage temperature of the heat storage material (magnesium hydroxide heat storage material) is rate-limited to about 300°C, the generation of steam cannot catch up, and a problem occurs in followability. Although it is possible to compensate for heat shortage by using the heater in combination, in a general sheath heater, the temperature is limited to about 800°C due to heat resistance of an insulating material, and sufficient followability cannot be obtained. In the solid oxide-type cell system described in PTL 2, water is evaporated by heat exchange using the external heat source to generate steam, and as for the heat insufficient in the external heat source, a mixed gas, which is obtained by mixing hydrogen stored in the hydrogen tank under pressure with the steam for electrolysis, is introduced into the combustor and combusted, but since pressurized hydrogen is used, energy loss corresponding to boosting occurs. Since the mixed gas of hydrogen and steam is introduced into the combustor and contains steam, stable combustion cannot be obtained, and the steam for electrolysis may not be sufficiently heated.

A main object of a solid oxide-type electrolysis cell system according to the disclosure is to provide a solid oxide-type electrolysis cell system capable of generating steam for electrolysis with good followability.

### Solution to Problem

The solid oxide-type electrolysis cell system according to the disclosure employs the following units in order to achieve the above-described main object.

The solid oxide-type electrolysis cell system of the disclosure is a solid oxide-type electrolysis cell system, and the solid oxide-type electrolysis cell system includes:
a solid oxide-type electrolysis cell configured to generate hydrogen by steam electrolysis;
a combustion unit configured to combust a fuel electrode off-gas from a fuel electrode of the solid oxide-type electrolysis cell;
a case that has a heat insulating property and houses the solid oxide-type electrolysis cell and the combustion unit;
a water and steam supply unit configured to supply water or steam to a fuel supply line connected to the fuel electrode;
a preheating unit provided in the case and configured to preheat water or steam flowing through the fuel supply line by combustion heat or a combustion exhaust gas of the combustion unit;
a condensation unit provided outside the case and configured to condense steam contained in the fuel electrode off-gas from the fuel electrode; and
a combustion reflux line configured to reflux a part of the fuel electrode off-gas having passed through the condensation unit by driving a pump and to supply the part of the fuel electrode off-gas to the combustion unit.

In the solid oxide-type electrolysis cell system according to the disclosure, since hydrogen after the steam contained in the fuel electrode off-gas is condensed by a condenser is supplied to the combustion unit, combustion in the combustion unit can be stabilized. Accordingly, it is possible to generate steam for electrolysis with good followability.

### Brief Description of Drawings

[Fig. 1] Fig. 1 is a schematic configuration diagram of a solid oxide-type electrolysis cell system according to an embodiment.
[Fig. 2] Fig. 2 is a schematic configuration diagram of a solid oxide-type electrolysis cell system according to another embodiment.
[Fig. 3] Fig. 3 is a schematic configuration diagram of a solid oxide-type electrolysis cell system according to another embodiment.

### Description of Embodiments

Embodiments of the disclosure will be described with reference to the drawings.

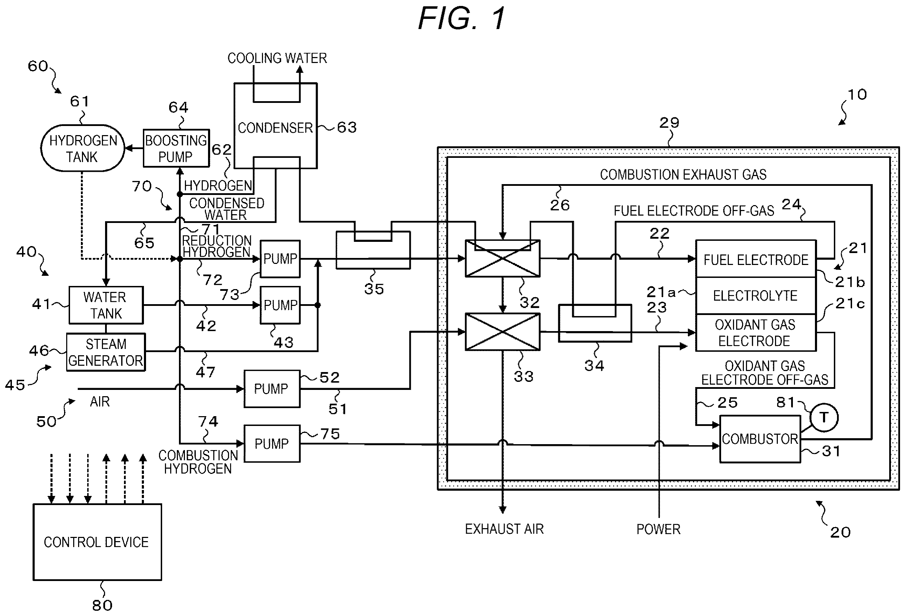

Fig. 1 is a schematic configuration diagram of a solid oxide-type electrolysis cell system according to an embodiment. A solid oxide-type electrolysis cell system 10 according to the embodiment includes an electrolysis module 20 including an electrolysis cell stack 21, a water supply system 40 that supplies water to the electrolysis module 20, a steam supply system 45 that supplies steam to the electrolysis module 20, an air supply system 50 that supplies air to the electrolysis module 20, a hydrogen recovery system 60 that recovers, in a hydrogen tank 61, hydrogen generated by an electrolysis operation, a reflux system 70 that refluxes the generated hydrogen to the electrolysis module 20, and a control device 80 that controls the entire system.

The electrolysis module 20 includes, in addition to the electrolysis cell stack 21, a combustor 31, a preheater 32, heat exchangers 33 and 34, and the like, which are housed in a module case 29 having a heat insulating property.

The electrolysis cell stack 21 includes a plurality of solid oxide-type single cells each including a solid electrolyte 21a made of stabilized zirconia (for example, YSZ) and the like, a fuel electrode 21b made of a composite of a catalyst metal such as Ni and the stabilized zirconia and the like disposed on one surface side of the solid electrolyte 21a, and an oxidant gas electrode 21c such as LSCF disposed on the other surface side of the solid electrolyte 21a. The electrolysis cell stack 21 is supplied with power from a power source, and electrolyzes steam supplied to the fuel electrode 21b to generate hydrogen. As the power source, a system power source, renewable energy (for example, a solar photovoltaic device), a storage battery, and the like can be used.

One end of a fuel gas supply pipe 22 is connected to a fuel electrode inlet of the electrolysis cell stack 21, and the water supply system 40 and the steam supply system 45 are connected to the other end of a fuel gas supply pipe 22a. The preheater 32 is disposed in the fuel gas supply pipe 22a. One end of an oxidant gas supply pipe 23 is connected to an oxidant gas electrode inlet of the electrolysis cell stack 21, and the air supply system 50 is connected to the other end of the oxidant gas supply pipe 23. The oxidant gas supply pipe 23 is provided with the heat exchangers 33 and 34.

One end of a fuel electrode off-gas pipe 24 is connected to a fuel electrode outlet of the electrolysis cell stack 21, and the hydrogen recovery system 60 outside the module case 29 is connected to the other end of the fuel electrode off-gas pipe 24. The fuel electrode off-gas pipe 24 passes through the heat exchanger 34 and the preheater 32 in this order in the module case 29, and passes through a heat exchanger 35 outside the module case 29. One end of an oxidant gas electrode off-gas pipe 25 is connected to an oxidant gas electrode outlet of the electrolysis cell stack 21, and the combustor 31 is connected to the other end of the oxidant gas electrode off-gas pipe 25.

The combustor 31 is provided with an ignition device (not shown), and combusts a mixed gas of a fuel electrode off-gas and an oxidant gas electrode off-gas introduced into the combustor 31. A combustion exhaust gas generated by the combustion of the mixed gas in the combustor 31 is discharged to a combustion exhaust gas pipe 26, passes through the preheater 32 and the heat exchanger 33 in this order, and is discharged to the outside of the module case 29. The combustor 31 is provided with a temperature sensor 81 for detecting a temperature in the combustor 31.

In the embodiment, the preheater 32 is disposed close to the combustor 31 in a heat transferable manner, and preheats (heats) water or steam passing through the preheater 32 by combustion heat or a high-temperature combustion exhaust gas generated in the combustor 31. The preheater 32 may be formed integrally with the combustor 31.

The water supply system 40 includes a water tank 41 that stores water (raw material water), a water supply pipe 42 having one end connected to the water tank 41 and the other end connected to the fuel gas supply pipe 22, and a water pump 43 disposed in the water supply pipe 42. By driving the water pump 43, the water in the water tank 41 passes through the heat exchanger 35 and the preheater 32 in this order, is converted into steam, is heated to a necessary temperature, and then is supplied to the fuel electrode 21b of the electrolysis cell stack 21.

The steam supply system 45 includes a steam generator 46 and a steam supply pipe 47 having one end connected to the steam generator 46 and the other end connected to the fuel gas supply pipe 22. The steam generator 46 generates steam by using a heat source, and examples thereof include a steam generation heat pump that generates steam from water in the water tank 41 by using exhaust heat outside the system by a heat pump. As the exhaust heat outside the system, for example, exhaust heat at a low temperature (for example, 100°C or lower) that cannot be used (unused exhaust heat) can be used in a facility that generates a lot of exhaust heat, such as factory exhaust heat. By effectively utilizing the unused exhaust heat, efficiency of the system can be improved. In the embodiment, the supply of steam to the fuel electrode 21b is mainly performed by the steam supply system 45. When it is difficult to generate steam in the steam supply system 45 due to fluctuation of the heat source, water from the water supply system 40 is converted into steam by the heat exchanger 35 or the preheater 32 and is supplied.

The air supply system 50 includes an air supply pipe 51 having one end connected to a filter (not shown) and the other end connected to the oxidant gas supply pipe 23, and an air pump 52 disposed in the air supply pipe 51. By driving the air pump 52, the air sucked into the air supply pipe 51 via the filter passes through the heat exchanger 33 and the heat exchanger 34 in this order, is heated to a required temperature, and is then supplied to the oxidant gas electrode 21c of the electrolysis cell stack 21.

The hydrogen recovery system 60 includes the hydrogen tank 61 that stores hydrogen, a recovery pipe 62 having one end connected to the hydrogen tank 61, a condenser 63 that condenses steam contained in the fuel electrode off-gas, and a boosting pump 64 that boosts hydrogen in the recovery pipe 62 and feeds the hydrogen to the hydrogen tank 61. The condenser 63 has a heat exchange flow path capable of exchanging heat with cooling water, the other end of the fuel electrode off-gas pipe 24 is connected to an inlet of the heat exchange flow path, and the other end of the recovery pipe 62 is connected to an outlet of the heat exchange flow path. The fuel electrode off-gas containing hydrogen and steam flowing through the fuel electrode off-gas pipe 24 is subjected to heat exchange with the cooling water, so that the steam contained in the fuel electrode off-gas is condensed by the condenser 63, and is then boosted by the boosting pump 64 and recovered in the hydrogen tank 61. Condensed water obtained by condensation of the fuel electrode off-gas in the condenser 63 is stored in the water tank 41 through a condensed water pipe 65. The water stored in the water tank 41 is used to generate steam for electrolysis.

The reflux system 70 includes a branch pipe 71 branched from upstream of the boosting pump 64 in the recovery pipe 62, a reduction hydrogen supply pipe 72 for connecting the branch pipe 71 and the fuel gas supply pipe 22, a hydrogen pump 73 disposed in the reduction hydrogen supply pipe 72, a combustion hydrogen supply pipe 74 for connecting the branch pipe 71 and the combustor 31, and a hydrogen pump 75 disposed in the combustion hydrogen supply pipe 74. By driving the hydrogen pump 73, the fuel electrode off-gas that has passed through the condenser 63 and from which steam has been removed is supplied as reduction hydrogen to the fuel electrode 21b of the electrolysis cell stack 21 through the heat exchanger 35 and the preheater 32. The reduction hydrogen is used to maintain the fuel electrode 21b in a reducing atmosphere and prevent oxidative degradation of the material (Ni) of the fuel electrode 21b. By driving the hydrogen pump 75, the fuel electrode off-gas that has passed through the condenser 63 and from which steam has been removed is supplied as combustion hydrogen to the combustor 31. An oxidant gas electrode off-gas containing oxygen is supplied from the oxidant gas electrode 21c to the combustor 31, and a mixed gas of the combustion hydrogen and the oxidant gas electrode off-gas (oxygen) is combusted in the combustor 31 to generate combustion heat and a high-temperature combustion exhaust gas (steam). Accordingly, in the preheater 32, it is possible to generate steam or raise the temperature of the steam by the combustion heat or the high-temperature combustion exhaust gas. Since the combustion hydrogen supplied to the combustor 31 is the fuel electrode off-gas after the steam is removed by passing through the condenser 63, the combustibility can be improved as compared with the case where the fuel electrode off-gas containing a large amount of steam before passing through the condenser 63 is supplied to the combustor 31. Furthermore, by supplying the combustion hydrogen at a normal temperature and a normal pressure to the combustor 31, an inexpensive general-purpose pump can be used as the hydrogen pump 75, and the cost can be reduced. The reduction hydrogen supply pipe 72 and the combustion hydrogen supply pipe 74 are respectively connected to the branch pipe 71 so as to be further branched from the branch pipe 71, and the hydrogen pumps 73 and 75 are respectively disposed in the reduction hydrogen supply pipe 72 and the combustion hydrogen supply pipe 74. A supply amount of the reduction hydrogen and a supply amount of the combustion hydrogen can be individually controlled by individually controlling the hydrogen pumps 73 and 75.

Although not shown, the control device 80 is implemented as a microprocessor including a CPU as a main component, and includes, in addition to the CPU, a ROM for storing a processing program, a RAM for temporarily storing data, and an input and output port. Temperature signals from a temperature sensor disposed near the electrolysis cell stack 21, the temperature sensor 81 disposed in the combustor 31, and the like, flow rate signals from a flow rate sensor disposed in the water supply pipe 42, a flow rate sensor disposed in the steam supply pipe 47, a flow rate sensor disposed in the air supply pipe 51, and the like are input to the control device 80 via an input port. On the other hand, the control device 80 outputs control signals to the water pump 43, the air pump 52, the boosting pump 64, the hydrogen pumps 73 and 75, and the like via an output port.

Next, an operation (electrolysis operation) of the solid oxide-type electrolysis cell system 10 according to the embodiment implemented as described above will be described.

In the electrolysis operation, steam as a fuel gas and a slight amount of reduction hydrogen are introduced into the fuel electrode 21b of the electrolysis cell stack 21 through the fuel gas supply pipe 22 by the steam supply system 45 and the reflux system 70, and air as a sweep gas is introduced into the oxidant gas electrode 21c of the electrolysis cell stack 21 through the oxidant gas supply pipe 23 by the air supply system 50. When power of a predetermined voltage is supplied between terminals of the electrolysis cell stack 21 by the power source, the steam introduced into the fuel electrode 21b is decomposed into hydrogen and oxygen ions (O²⁻) by an electrolysis action in the fuel electrode 21b, and the oxygen ions permeate the solid electrolyte 21a to generate oxygen in the oxidant gas electrode 21c. In the embodiment, since a slight amount of reduction hydrogen is also supplied to the fuel electrode 21b together with steam, the fuel electrode 21b is maintained in the reducing atmosphere, and oxidative degradation of the fuel electrode 21b can be prevented.

The hydrogen generated in the fuel electrode 21b is discharged to the fuel electrode off-gas pipe 24 as the fuel electrode off-gas together with the steam not subjected to electrolysis, passes through the heat exchanger 34, the preheater 32, and the heat exchanger 35 in this order, exchanges heat with the air flowing through the oxidant gas supply pipe 23 and the steam flowing through the fuel gas supply pipe 22, and is then supplied to the hydrogen recovery system 60. Further, the fuel electrode off-gas supplied to the hydrogen recovery system 60 is cooled by heat exchange with the cooling water in the condenser 63 to remove the steam, and then passes through the recovery pipe 62, is boosted by the boosting pump 64, and is recovered in the hydrogen tank 61. A part of the fuel electrode off-gas that has passed through the condenser 63 and from which the steam has been removed is supplied as the reduction hydrogen to the fuel electrode 21b of the electrolysis cell stack 21 from the branch pipe 71 upstream of the boosting pump 64 in the recovery pipe 62 through the reduction hydrogen supply pipe 72 by driving the hydrogen pump 73.

Here, when a sufficient amount of steam cannot be supplied from the steam supply system 45 due to fluctuation of the heat source used in the steam generator 46 and the like, the water pump 43 is driven to supply water from the water supply system 40 instead of the steam supply system 45 to the fuel gas supply pipe 22. In this case, the combustion heat or the high-temperature combustion exhaust gas obtained by combusting the combustion hydrogen in the combustor 31 is mainly used as the heat necessary for generating steam or raising the temperature of steam. That is, the fuel electrode off-gas flowing from the fuel electrode off-gas pipe 24 through the condenser 63 and the recovery pipe 62 is a hydrogen gas at a normal temperature and a normal pressure upstream of the boosting pump 64, and is supplied to the combustor 31 as the combustion hydrogen by driving the hydrogen pump 75. The combustion hydrogen supplied to the combustor 31 is mixed with the oxygen-containing oxidant gas electrode off-gas supplied from the oxidant gas electrode 21c, and is combusted. The combustion heat and the high-temperature combustion exhaust gas generated by the combustion of the mixed gas in the combustor 31 are supplied to the preheater 32, and the water supplied from the water supply system 40 is evaporated and heated by the preheater 32. By combusting the combustion hydrogen having a high combustion rate and a high combustion temperature in the combustor 31, heat can be quickly applied to the preheater 32, and steam can be generated with good followability. Accordingly, steam can be stably supplied to the fuel electrode 21b of the electrolysis cell stack 21 regardless of the fluctuation of the heat source.

The combustion exhaust gas generated in the combustor 31 passes through the preheater 32, is supplied to the heat exchanger 33, exchanges heat with the air supplied from the air supply system 50 to the oxidant gas electrode 21c in the heat exchanger 33, and is discharged to the outside of the module case 29. The combustion exhaust gas discharged to the outside of the module case 29 is discharged to the outside air after steam contained in the combustion exhaust gas is removed by heat exchange with cooling water in a condenser (not shown). Condensed water obtained by the condenser is supplied to the water tank 41. In the embodiment, the preheater 32 is used to evaporate water from the water supply system 40, but may be used to raise the temperature of steam from the steam supply system 45.

A supply amount of the combustion hydrogen can be controlled based on the temperature (combustor temperature) from the temperature sensor 81 disposed in the combustor 31. For example, the supply amount can be controlled by setting a target temperature of the combustor 31 based on a flow rate of water from the water supply system 40 and controlling the hydrogen pump 75 by feedback control such that the combustor temperature from the temperature sensor 81 becomes the set target temperature.

In the solid oxide-type electrolysis cell system 10 according to the embodiment described above, hydrogen after the steam contained in the fuel electrode off-gas is condensed by the condenser 63 is supplied to the combustor 31. Therefore, combustion in the combustor 31 can be stabilized, and steam for electrolysis can be generated with good followability by the combustion heat and the high-temperature combustion exhaust gas. Since the fuel electrode off-gas at the normal temperature and the normal pressure that has passed through the condenser 63 provided outside the module case 29 is refluxed by driving the hydrogen pump 75, an inexpensive general-purpose pump can be used as the hydrogen pump 75, and the cost can be reduced.

The solid oxide-type electrolysis cell system 10 according to the embodiment includes the hydrogen tank 61, the recovery pipe 62 connecting the hydrogen tank 61 and the condenser 63, and the boosting pump 64 disposed in the recovery pipe 62. The combustion hydrogen supply pipe 74 is branched from upstream of the boosting pump 64 in the recovery pipe 62 and is connected to the combustor 31. When the pressurized hydrogen in the hydrogen tank 61 is supplied to the combustor 31, energy loss corresponding to the boosting by the boosting pump 64 occurs. On the other hand, by supplying the hydrogen (fuel electrode off-gas) at the normal temperature and the normal pressure from upstream of the boosting pump 64 in the recovery pipe 62 to the combustor 31 by driving the pump, the energy consumption in the entire auxiliary machine can be reduced, and the energy efficiency can be further improved.

The solid oxide-type electrolysis cell system 10 according to the embodiment includes the reduction hydrogen supply pipe 72 that refluxes a part of the fuel electrode off-gas having passed through the condenser 63 by driving the hydrogen pump 73 and supplies the part of the fuel electrode off-gas to the fuel gas supply pipe 22. The reduction hydrogen supply pipe 72 is branched from upstream of the boosting pump 64 in the recovery pipe 62 and is connected to the fuel gas supply pipe 22. When the pressurized hydrogen in the hydrogen tank 61 is supplied to the fuel gas supply pipe 22, the energy loss corresponding to the boosting by the boosting pump 64 occurs. On the other hand, by supplying the hydrogen (fuel electrode off-gas) at the normal temperature and the normal pressure from upstream of the boosting pump 64 in the recovery pipe 62 to the fuel gas supply pipe 22 by driving the pump, the energy consumption in the entire auxiliary machine can be reduced, and the energy efficiency can be further improved.

In the above embodiment, the heat exchanger 34 that heats the air from the air supply system 50 by heat exchange with the combustion exhaust gas is provided in the module case 29, but the heat exchanger 34 may be omitted. The heat exchanger 35 for heating water or steam from the water supply system 40 or the steam supply system 45 by heat exchange with the combustion exhaust gas is provided outside the module case 29, but the heat exchanger 35 may be omitted.

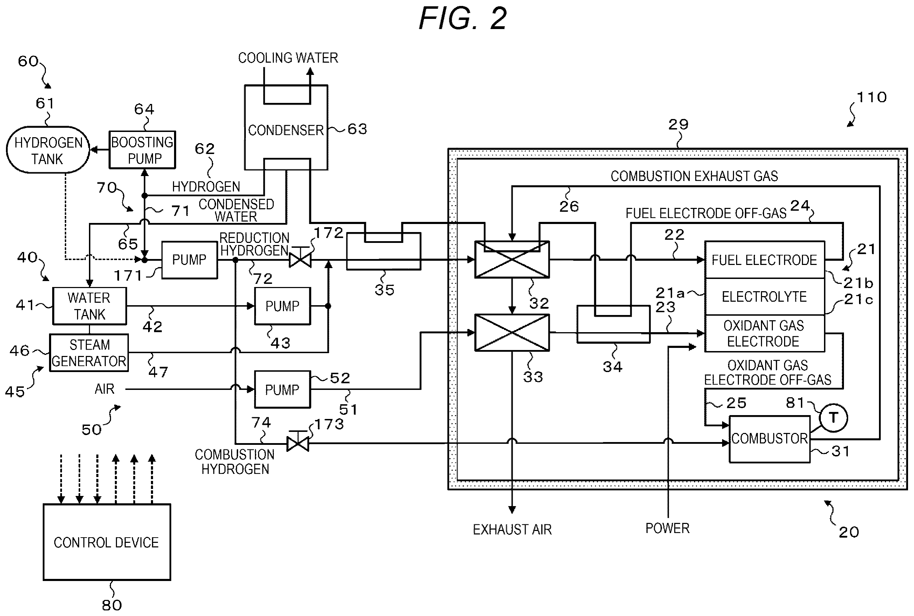

In the above embodiment, the reduction hydrogen supply pipe 72 and the combustion hydrogen supply pipe 74 are connected to the branch pipe 71 branched from upstream of the boosting pump 64 in the recovery pipe 62, and the hydrogen pumps 73 and 75 are disposed in the reduction hydrogen supply pipe 72 and the combustion hydrogen supply pipe 74. However, as shown in a solid oxide-type electrolysis cell system 110 according to another embodiment of Fig. 2, one hydrogen pump 171 disposed in the branch pipe 71, a flow rate regulating valve 172 disposed in the reduction hydrogen supply pipe 72, and a flow rate regulating valve 173 disposed in the combustion hydrogen supply pipe 74 may be provided. By individually controlling the flow rate regulating valves 172 and 173 while driving the hydrogen pump 171, the supply amount of the reduction hydrogen and the supply amount of the combustion hydrogen can be individually controlled.

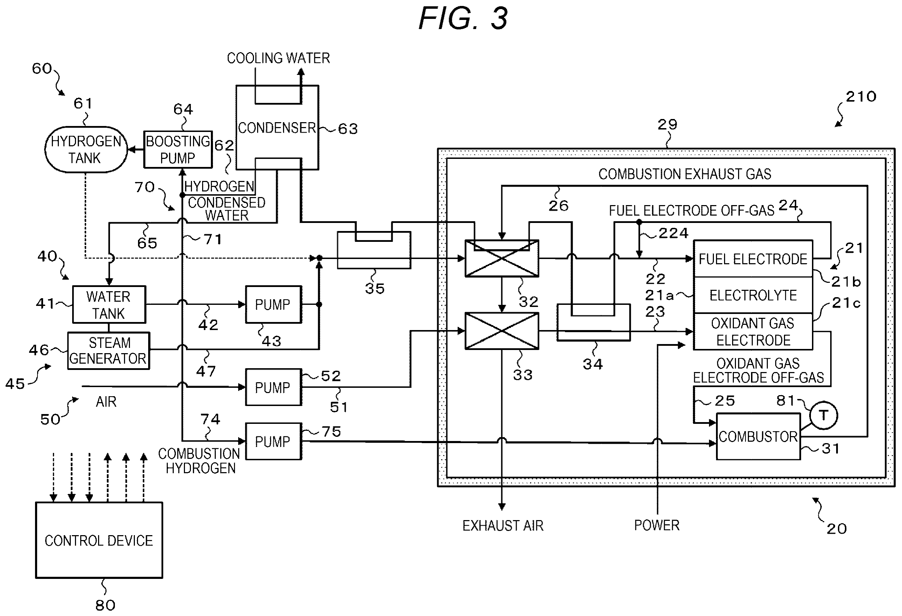

In the above embodiment, a part of the fuel electrode off-gas at the normal temperature and the normal pressure that has passed through the condenser 63 and from which steam has been removed is supplied as the reduction hydrogen to the fuel electrode 21b of the electrolysis cell stack 21. However, the pressurized hydrogen in the hydrogen tank 61 may be supplied to the fuel electrode 21b. As shown in a solid oxide-type electrolysis cell system 210 according to another embodiment of Fig. 3, a fuel electrode off-gas reflux pipe 224 branched from the fuel electrode off-gas pipe 24 and connected to the fuel gas supply pipe 22 may be provided in the module case 29, and a part of the fuel electrode off-gas flowing through the fuel electrode off-gas pipe 24 may be refluxed to the fuel electrode 21b as the reduction hydrogen.

In the above embodiment, the solid oxide-type electrolysis cell system 10 performs an electrolysis operation of generating hydrogen by high-temperature steam electrolysis. However, the solid oxide-type electrolysis cell system 10 may have an EC mode, in which the above electrolysis operation is performed, and an FC mode in which a power generation operation of generating power by a reaction between hydrogen as a fuel gas and oxygen contained in an oxidant gas is performed. In this case, the solid oxide-type electrolysis cell system 10 can switch and execute the FC mode and the EC mode according to the demand for power. For example, the FC mode can be selected when a load requests power, and the EC mode can be selected when a load does not request power. In a system in which a demand-response contract is concluded, the FC mode can be selected when a downward DR for reducing a demand amount of power is requested, and the EC mode can be selected when an upward DR for increasing a demand amount of power is requested.

In the power generation operation, hydrogen from the hydrogen tank 61 is introduced as the fuel gas into the fuel electrode 21b of the electrolysis cell stack 21 through the fuel gas supply pipe 22, and air from the air supply system 50 is introduced as the oxidant gas into an air electrode of the electrolysis cell stack 21 through the oxidant gas supply pipe 23. At the oxidant gas electrode 21c, oxide ions (O²⁻) are generated, and the oxide ions permeate the solid electrolyte 21a and react with hydrogen at the fuel electrode 21b to obtain electrical energy. The fuel electrode off-gas not used for an electrochemical reaction (power generation) in the fuel electrode 21b is supplied to the condenser 63 through the fuel electrode off-gas pipe 24, and after steam contained in the fuel electrode off-gas is removed, the fuel electrode off-gas is supplied to the combustor 31 from the recovery pipe 62 through the branch pipe 71 and the combustion hydrogen supply pipe 74 by driving the hydrogen pump 75. The oxidant gas electrode off-gas not used for the electrochemical reaction (power generation) in the oxidant gas electrode 21c is directly supplied to the combustor 31. The combustion heat and the high-temperature combustion exhaust gas generated by the combustion of the mixed gas of the fuel electrode off-gas and the air electrode off-gas in the combustor 31 are supplied to the preheater 32 and the heat exchanger 33. The hydrogen flowing through the fuel gas supply pipe 22 is supplied to the fuel electrode 21b after being heated by the preheater 32, and the air flowing through the oxidant gas supply pipe 23 is supplied to the oxidant gas electrode 21c after being heated by the heat exchanger 33. Accordingly, the hydrogen pump 75 can be shared between the EC mode and the FC mode.

### [Summary of Embodiments]

As described above, a solid oxide-type electrolysis cell system (10) according to the disclosure includes: a solid oxide-type electrolysis cell (21) configured to generate hydrogen by steam electrolysis; a combustion unit (31) configured to combust a fuel electrode off-gas from a fuel electrode (21b) of the solid oxide-type electrolysis cell (21); a case (29) that has a heat insulating property and houses the solid oxide-type electrolysis cell (21) and the combustion unit (31); a water and steam supply unit (40, 45) configured to supply water or steam to a fuel supply line (22) connected to the fuel electrode (21b); a preheating unit (32) provided in the case (29) and configured to preheat water or steam flowing through the fuel supply line (22) by combustion heat or a combustion exhaust gas of the combustion unit (31); a condensation unit (63) provided outside the case (29) and configured to condense steam contained in the fuel electrode off-gas from the fuel electrode (21b); and a combustion reflux line (71, 74) configured to reflux a part of the fuel electrode off-gas having passed through the condensation unit (63) by driving a pump (75) and to supply the part of the fuel electrode off-gas to the combustion unit (31).

In the solid oxide-type electrolysis cell system according to the disclosure, since hydrogen after the steam contained in the fuel electrode off-gas is condensed by a condenser is supplied to the combustion unit, combustion in the combustion unit can be stabilized. Accordingly, it is possible to generate steam for electrolysis with good followability.

The solid oxide-type electrolysis cell system (10) according to the disclosure may further include: a hydrogen tank (61) configured to store hydrogen; a recovery line (62) configured to connect the hydrogen tank (61) and the condensation unit (63); and a boosting pump (64) provided in the recovery line (62) and configured to boost the fuel electrode off-gas having passed through the condensation unit (63) and to feed the fuel electrode off-gas to the hydrogen tank (61), in which the combustion reflux line (71, 74) may be branched from upstream of the boosting pump (64) in the recovery line (62) and connected to the combustion unit (31).

When pressurized hydrogen in the hydrogen tank is supplied to the combustion unit, energy loss corresponding to boosting by the boosting pump occurs. On the other hand, by supplying hydrogen (fuel electrode off-gas) at a normal temperature and a normal pressure from upstream of the boosting pump in the recovery line to the combustion unit by driving the pump, energy consumption in an entire auxiliary machine can be reduced, and energy efficiency can be further improved.

The solid oxide-type electrolysis cell system (10) according to the disclosure may further include a reduction reflux line (71, 72) configured to reflux a part of the fuel electrode off-gas having passed through the condensation unit (63) by driving a pump (73) and to supply the part of the fuel electrode off-gas to the fuel supply line (22). In this case, the solid oxide-type electrolysis cell system (10) may further include: a hydrogen tank (61) configured to store hydrogen; a recovery line (62) configured to connect the hydrogen tank (61) and the condensation unit (63); and a boosting pump (64) provided in the recovery line (62) and configured to boost the fuel electrode off-gas having passed through the condensation unit (63) and to feed the fuel electrode off-gas to the hydrogen tank (61), in which the combustion reflux line (71, 74) may be branched from upstream of the boosting pump (64) in the recovery line (62) and connected to the combustion unit (31), and the reduction reflux line (71, 72) may be branched from upstream of the boosting pump (64) in the recovery line (62) and connected to the fuel supply line (22).

When pressurized hydrogen in the hydrogen tank is supplied to the fuel supply line, energy loss corresponding to boosting by the boosting pump occurs. On the other hand, by supplying hydrogen (fuel electrode off-gas) at a normal temperature and a normal pressure from upstream of the boosting pump in the recovery line to the fuel supply line by driving the pump, energy consumption in an entire auxiliary machine can be reduced, and energy efficiency can be further improved.

The solid oxide-type electrolysis cell system (10) according to the disclosure may further include a heat exchanger (35) provided outside the case (29) and configured to perform heat exchange between the fuel electrode off-gas from the fuel electrode (21b) and water or steam flowing through the fuel supply line (22).

Accordingly, it is possible to efficiently raise a temperature of water or steam flowing through the fuel supply line to generate steam for electrolysis.

The above describes the form for implementing the disclosure using the embodiments, but the disclosure is not limited to the embodiments in any way, and it goes without saying that the disclosure can be implemented in various forms without departing from the gist of the disclosure.

### Industrial Applicability

The disclosure can be utilized in a production industry of a solid oxide-type electrolysis cell system.

### Reference Signs List

10, 110, 210: solid oxide-type electrolysis cell system
21: electrolysis cell stack (solid oxide-type electrolysis cell)
21b: fuel electrode
22: fuel gas supply pipe (fuel supply line)
29: module case (case)
31: combustor (combustion unit)
32: preheater (preheating unit)
35: heat exchanger (heat exchange unit)
40: water supply system (water and steam supply unit)
45: steam supply system (water and steam supply unit)
61: hydrogen tank
62: recovery pipe (recovery line)
63: condenser (condensation unit)
64: boosting pump
71: branch pipe (combustion reflux line, reduction reflux line)
72: reduction hydrogen supply pipe (reduction reflux line)
73: hydrogen pump (pump)
74: combustion hydrogen supply pipe (combustion reflux line)
75: hydrogen pump (pump)

## Claims

1. A solid oxide-type electrolysis cell system comprising:
a solid oxide-type electrolysis cell configured to generate hydrogen by steam electrolysis;
a combustion unit configured to combust a fuel electrode off-gas from a fuel electrode of the solid oxide-type electrolysis cell;
a case that has a heat insulating property and houses the solid oxide-type electrolysis cell and the combustion unit;
a water and steam supply unit configured to supply water or steam to a fuel supply line connected to the fuel electrode;
a preheating unit provided in the case and configured to preheat water or steam flowing through the fuel supply line by combustion heat or a combustion exhaust gas of the combustion unit;
a condensation unit provided outside the case and configured to condense steam contained in the fuel electrode off-gas from the fuel electrode; and
a combustion reflux line configured to reflux a part of the fuel electrode off-gas having passed through the condensation unit by driving a pump and to supply the part of the fuel electrode off-gas to the combustion unit.

2. The solid oxide-type electrolysis cell system according to claim 1, further comprising:
a hydrogen tank configured to store hydrogen;
a recovery line configured to connect the hydrogen tank and the condensation unit; and
a boosting pump provided in the recovery line and configured to boost the fuel electrode off-gas having passed through the condensation unit and to feed the fuel electrode off-gas to the hydrogen tank, wherein
the combustion reflux line is branched from upstream of the boosting pump in the recovery line and connected to the combustion unit.

3. The solid oxide-type electrolysis cell system according to claim 1 or 2, further comprising:
a reduction reflux line configured to reflux a part of the fuel electrode off-gas having passed through the condensation unit by driving a pump and to supply the part of the fuel electrode off-gas to the fuel supply line.

4. The solid oxide-type electrolysis cell system according to claim 3, further comprising:
the hydrogen tank configured to store hydrogen;
the recovery line configured to connect the hydrogen tank and the condensation unit; and
the boosting pump provided in the recovery line and configured to boost the fuel electrode off-gas having passed through the condensation unit and to feed the fuel electrode off-gas to the hydrogen tank, wherein
the combustion reflux line is branched from upstream of the boosting pump in the recovery line and connected to the combustion unit, and
the reduction reflux line is branched from upstream of the boosting pump in the recovery line and connected to the fuel supply line.

5. The solid oxide-type electrolysis cell system according to claim 1 or 2, further comprising:
a heat exchanger provided outside the case and configured to perform heat exchange between the fuel electrode off-gas from the fuel electrode and water or steam flowing through the fuel supply line.
